# EUROPEAN PATENT APPLICATION

(11) **EP 4 618 631 A1**
(43) Date of publication of application: **17.09.2025**
(21) Application number: 23893610.8
(22) Date of filing: 02.11.2023
(51) Int. Cl.: H04W 52/02, H04L 5/00

(54) **COMMUNICATION METHOD AND COMMUNICATION APPARATUS**

(30) Priority: 22.11.2022 CN 202211466014
(71) Applicant: Huawei Technologies Co., Ltd., Shenzhen, Guangdong 518129 (CN)
(72) Inventor: YANG, Qi, Shenzhen, Guangdong 518129 (CN); PAN, Yongchao, Shenzhen, Guangdong 518129 (CN); ZHONG, Wenguo, Shenzhen, Guangdong 518129 (CN); WU, Kang, Shenzhen, Guangdong 518129 (CN)
(74) Representative: Thun, Clemens
(86) International application number: PCT/CN2023/129434
(87) International publication number: WO 2024/109519

(57) **Abstract**

Embodiments of this application relate to the field of communication technologies and provide a communication method and a communication apparatus, to reduce power consumption of a module without affecting high-capacity and high-experience capabilities of a multi-antenna radio frequency module. A specific solution is: using a radio frequency channel in a first radio frequency channel set to carry a first-type signal, and using a radio frequency channel in a second radio frequency channel set to carry a second-type signal, where the first radio frequency channel set and the second radio frequency channel set are different, and functions of the first-type signal and the second-type signal are different. Embodiments of this application are used in a process of sending a signal on a radio frequency channel.

## Description

This application claims priority to Chinese Patent Application No. 202211466014.3, filed with the China National Intellectual Property Administration on November 22, 2022 and entitled "COMMUNICATION METHOD AND COMMUNICATION APPARATUS", which is incorporated herein by reference in its entirety.

### TECHNICAL FIELD

Embodiments of this application relate to the field of communication technologies, and in particular, to a communication method and a communication apparatus.

### BACKGROUND

To meet growing requirements on capacity and experience, a multi-antenna technology has been widely used. The multi-antenna technology may be understood as a spatial multiplexing technology, and can use multiple ports to implement multi-stream transmission, cell-level splitting, or user-level beamforming, to improve user capacity and user experience. However, in the multi-antenna technology, when the user capacity and the user experience are improved, power consumption of a multi-antenna radio frequency (radio frequency, RF) module is usually high.

### SUMMARY

Embodiments of this application provide a communication method and a communication apparatus, to reduce power consumption of a radio frequency module.

To achieve the foregoing objective, the following technical solutions are applied in embodiments of this application.

According to a first aspect, a communication method is provided. The method includes: using a radio frequency channel in a first radio frequency channel set to carry a first-type signal, and using a radio frequency channel in a second radio frequency channel set to carry a second-type signal, where the first radio frequency channel set and the second radio frequency channel set are different, and functions of the first-type signal and the second-type signal are different. For example, the method may be performed by a radio frequency device/module like a remote radio unit (remote radio unit, RRU) or an active antenna unit (active antenna unit, AAU), or may be implemented by a module, a device, or a circuit that can be used in or installed in a radio frequency device like an RRU or an AAU, or may be performed by a base station including an RRU or an AAU.

In comparison with a conventional technology in which signals carried on all radio frequency channels in a radio frequency module are the same, in this application, the radio frequency channels in the radio frequency module are decoupled based on a signal type. To be specific, the radio frequency channel in the first radio frequency channel set may be used to carry the first-type signal, and the radio frequency channel in the second radio frequency channel set may be used to carry the second-type signal. However, according to the method in the first aspect, processing of the first-type signal and processing of the second-type signal by a communication device may not interfere with each other. For the second-type signal, if a radio frequency channel does not carry the second-type signal, the radio frequency channel may be shut down to achieve an energy saving effect, without affecting the carrying of the first-type signal by the radio frequency channel carrying the first-type signal, so as to improve the energy saving effect and reduce power consumption.

In a possible design, the first-type signal is a cell-level common signal, and the second-type signal is a user-level signal. The cell-level common signal may be understood as a basic coverage signal, and includes a signal used by a terminal device to perform cell camping and access functions. The user-level signal may be understood as a capacity signal, and includes user-level data information, auxiliary information, control information, and the like. In this way, in this application, when the radio frequency channels are decoupled based on the signal type, the communication device may process the user-level signal in a manner different from that of processing the cell-level common signal, so that impact of processing the user-level signal by the communication device on the cell-level common signal can be reduced, and independence of the two signals can be improved.

In a possible design, the method further includes: determining, based on at least one of a load status on a network side or a signal quality level of the terminal device, a quantity of channels that are in the second radio frequency channel set and that are used to carry the second-type signal. The load status may reflect a service requirement of a cell. When the load status indicates that load of the cell is less than or equal to a threshold, only some radio frequency channels in the second radio frequency channel set may be activated. The signal quality level of the terminal device may reflect an interference status of the terminal device. When the signal quality level is higher than a threshold, only some radio frequency channels in the second radio frequency channel set need to be activated. In this way, an energy saving effect is achieved on the basis of activating some radio frequency channels.

In a possible design, in a scenario of a network in which multiple standards coexist, the first type of signal includes a first-type signal in the multi-standard network. The multi-standard network may be understood as a network in which long term evolution (long term evolution, LTE)/new radio (new radio, NR) and an older standard coexist. An older-standard network is, for example, a global system for mobile communications (global system for mobile communications, GSM), a universal mobile telecommunications system (universal mobile telecommunications system, UMTS), or a narrowband internet of things (narrowband internet of things, NB-IOT). Because data in the older-standard network is continuously transmitted, components in the radio frequency channel cannot be shut down. Considering that the radio frequency channel in the first radio frequency channel set carries the first-type signal, that is, the cell-level common signal, and the radio frequency channel in the first radio frequency channel set needs to be activated for a long time, the first-type signal may be carried on the radio frequency channel in the first radio frequency channel set. In this way, basic coverage of a cell can be ensured, and continuous transmitting of a signal in the older-standard network is not affected.

In a possible design, the method further includes: using the first radio frequency channel set to carry the first-type signal and the second-type signal in a time division and/or frequency division manner, where the first-type signal includes a first-type signal in the multi-standard network, and the second-type signal includes a second-type signal in the multi-standard network.

Because the cell-level common signal is periodically sent at intervals when the radio frequency channel in the first radio frequency channel set carries the cell-level common signal, and the radio frequency channel in the first radio frequency channel set does not occupy all time domain and frequency domain resources, the radio frequency channel in the first radio frequency channel set may alternatively carry the first-type signal and the second-type signal in the time division and/or frequency division manner, including the first-type signal and the second-type signal in the multi-standard network. In this way, resource utilization can be improved.

In a possible design, power of an analog component in the radio frequency channel in the first radio frequency channel set is greater than or equal to power of an analog component in a radio frequency channel that is in the second radio frequency channel set and that carries the second-type signal but does not carry the first-type signal. For example, the analog component is a power amplifier (power amplifier, PA). In this design, it is considered that, when the first-type signal is the cell-level common signal and the second-type signal is the user-level signal, to ensure that basic coverage of a cell remains unchanged, an analog component in a radio frequency channel carrying a basic coverage function needs to be configured with higher power than an analog component carrying a capacity function, so that power can be increased for a resource element (resource element, RE) at a specific frequency position corresponding to a common channel, to ensure that the basic coverage is not affected.

In a possible design, antenna elements corresponding to the first radio frequency channel set are discretely distributed. Considering a quantity of channels carrying the basic coverage function, to maintain a converged shape of a basic coverage beam in a horizontal direction (for example, forming a horizontal beamwidth of about 65 degrees) within a limited antenna array range, a horizontal distance between antenna arrays that transmit cell-level common signals needs to be as far as possible. For example, from a perspective of an overall design of an antenna installation platform, when an overall structure of the antenna installation platform remains unchanged, antenna elements corresponding to channels carrying cell-level common signals are disposed at side column positions on both horizontal sides of the antenna installation platform. This is a maximum horizontal distance that can be achieved, and a converged beam shape can also be formed.

In a possible design, the first radio frequency channel set is coupled to a first module-level digital component set, the second radio frequency channel set is coupled to a second module-level digital component set, and the first module-level digital component set and the second module-level digital component set are different. In other words, in this application, module-level digital components in the radio frequency modules may also be decoupled at a virtual or physical level based on basic coverage and capacity/experience functions. After the module-level digital components in the radio frequency modules are also distinguished based on the signal type, a functional block (for example, a common public radio interface (common public radio interface, CPRI) or an enhanced common public radio interface (enhanced-CPRI, eCPRI)) in the second module-level digital component set may also enter, following a capacity channel, a shutdown state for a long time when light load occurs, and does not need to be continuously activated to meet a coverage requirement, so that energy consumption can be greatly reduced.

In a possible design, the digital component set includes a fronthaul interface, for example, the fronthaul interface may be an interface between a baseband unit (building base band unit, BBU) and an RRU.

According to a second aspect, a communication method is provided. The method includes: sending a first control signal, where the first control signal indicates that a radio frequency channel in a first radio frequency channel set carries a first-type signal; and sending a second control signal, where the second control signal indicates that a radio frequency channel in a second radio frequency channel set carries a second-type signal, the first radio frequency channel set and the second radio frequency channel set are different, and functions of the first-type signal and the second-type signal are different.

The communication method in the second aspect may be performed by a baseband processing device/module, for example, performed by a BBU, or may be implemented by a module, a device, or a circuit that can be used in or installed in a baseband processing unit like a BBU, or may be performed by a base station including a BBU. In other words, based on the method in the first aspect being performed by the radio frequency device/module, a method procedure on a radio frequency device/module side may be performed after being configured by the baseband processing device/module. Therefore, the second aspect can achieve same beneficial effects as the first aspect. Details are not described herein again.

In a possible design, the first-type signal is a cell-level common signal, and the second-type signal is a user-level signal.

In a possible design, before the sending a second control signal, the method further includes: determining, based on at least one of a load status on a network side or a signal quality level of a terminal device, a quantity of channels that are in the second radio frequency channel set and that are used to carry the second-type signal.

In a possible design, when the load status on the network side is lower and/or the signal quality level of the terminal device is higher, the quantity of the channels used to carry the second-type signal is smaller.

In a possible design, the method further includes: sending a third control signal, where the third control signal indicates that the first radio frequency channel set carries the first-type signal and the second-type signal in a time division and/or frequency division manner, the first-type signal includes a first-type signal in a multi-standard network, and the second-type signal includes a second-type signal in the multi-standard network.

In a possible design, the method further includes: sending a fourth control signal, where the fourth control signal indicates that a first module-level digital component set and the first radio frequency channel set carry the first-type signal, and a second module-level digital component set and the second radio frequency channel set carry the second-type signal.

According to a third aspect, a communication apparatus is provided. The communication apparatus includes: a radio frequency channel in a first radio frequency channel set, configured to carry a first-type signal; and a radio frequency channel in a second radio frequency channel set, configured to carry a second-type signal, where the first radio frequency channel set and the second radio frequency channel set are different, and functions of the first-type signal and the second-type signal are different.

For beneficial effects of the third aspect, refer to the descriptions of the first aspect.

In a possible design, the first-type signal is a cell-level common signal, and the second-type signal is a user-level signal.

In a possible design, the communication apparatus further includes a processor. The processor is configured to determine, based on at least one of a load status on a network side or a signal quality level of a terminal device, a quantity of channels that are in the second radio frequency channel set and that are used to carry the second-type signal.

In a possible design, in a scenario of a network in which multiple standards coexist, the first type of signal includes a first-type signal in the multi-standard network.

In a possible design, the radio frequency channel in the first radio frequency channel set is used to carry the first-type signal and the second-type signal in a time division and/or frequency division manner, where the first-type signal includes a first-type signal in the multi-standard network, and the second-type signal includes a second-type signal in the multi-standard network.

In a possible design, power of an analog component in the radio frequency channel in the first radio frequency channel set is greater than or equal to power of an analog component in a radio frequency channel that is in the second radio frequency channel set and that carries the second-type signal but does not carry the first-type signal.

In a possible design, antenna elements corresponding to the first radio frequency channel set are discretely distributed.

In a possible design, the first radio frequency channel set is coupled to a first module-level digital component set, the second radio frequency channel set is coupled to a second module-level digital component set, and the first module-level digital component set and the second module-level digital component set are different.

In a possible design, the digital component set includes a fronthaul interface.

According to a fourth aspect, a communication apparatus is provided. The communication apparatus includes a memory and a transceiver. The memory is configured to store data. The transceiver is configured to: send a first control signal, where the first control signal indicates that a radio frequency channel in a first radio frequency channel set carries a first-type signal; and send a second control signal, where the second control signal indicates that a radio frequency channel in a second radio frequency channel set carries a second-type signal, the first radio frequency channel set and the second radio frequency channel set are different, and functions of the first-type signal and the second-type signal are different.

In a possible design, the first-type signal is a cell-level common signal, and the second-type signal is a user-level signal.

In a possible design, a processor is further included. The processor is configured to determine, based on at least one of a load status on a network side or a signal quality level of a terminal device, a quantity of channels that are in the second radio frequency channel set and that are used to carry the second-type signal.

In a possible design, when the load status on the network side is lower and/or the signal quality level of the terminal device is higher, the quantity of the channels used to carry the second-type signal is smaller.

In a possible design, the transceiver is further configured to send a third control signal, where the third control signal indicates that the first radio frequency channel set carries the first-type signal and the second-type signal in a time division and/or frequency division manner, the first-type signal includes a first-type signal in a multi-standard network, and the second-type signal includes a second-type signal in the multi-standard network.

In a possible design, the transceiver is further configured to send a fourth control signal, where the fourth control signal indicates that a first module-level digital component set and the first radio frequency channel set carry the first-type signal, and a second module-level digital component set and the second radio frequency channel set carry the second-type signal.

According to a fifth aspect, a communication apparatus is provided, including a sending module. The sending module is configured to: send a first control signal, where the first control signal indicates that a radio frequency channel in a first radio frequency channel set carries a first-type signal; and send a second control signal, where the second control signal indicates that a radio frequency channel in a second radio frequency channel set carries a second-type signal, the first radio frequency channel set and the second radio frequency channel set are different, and functions of the first-type signal and the second-type signal are different.

In a possible design, the first-type signal is a cell-level common signal, and the second-type signal is a user-level signal.

In a possible design, a processing module is further included. The processing module is configured to determine, based on at least one of a load status on a network side or a signal quality level of a terminal device, a quantity of channels that are in the second radio frequency channel set and that are used to carry the second-type signal.

In a possible design, when the load status on the network side is lower and/or the signal quality level of the terminal device is higher, the quantity of the channels used to carry the second-type signal is smaller.

In a possible design, the sending module is further configured to send a third control signal, where the third control signal indicates that the first radio frequency channel set carries the first-type signal and the second-type signal in a time division and/or frequency division manner, the first-type signal includes a first-type signal in a multi-standard network, and the second-type signal includes a second-type signal in the multi-standard network.

In a possible design, the sending module is further configured to send a fourth control signal, where the fourth control signal indicates that a first module-level digital component set and the first radio frequency channel set carry the first-type signal, and a second module-level digital component set and the second radio frequency channel set carry the second-type signal.

According to a sixth aspect, a chip is provided. The chip is coupled to a memory, and is configured to read and execute program instructions stored in the memory, to implement the method according to any one of the first aspect or the designs of the first aspect, and/or the method according to any one of the second aspect or the designs of the second aspect.

According to a seventh aspect, a device is provided, including one or more processors and one or more memories. The one or more memories are coupled to the one or more processors. The one or more memories are configured to store computer program code, and the computer program code includes computer instructions. When the one or more processors execute the computer instructions, a computer is enabled to perform the communication method according to any one of the foregoing aspects and the possible implementations. Further, the device may further include an antenna.

According to an eighth aspect, a computer-readable storage medium is provided, including computer instructions. When the computer instructions are run on a computer, the computer is enabled to perform the communication method according to any one of the foregoing aspects and the possible implementations.

According to a ninth aspect, a computer program product is provided. When the computer program product runs on a computer or a processor, the computer or the processor is enabled to perform the communication method according to any one of the foregoing aspects and the possible implementations.

According to a tenth aspect, an embodiment of this application provides a system. The system may include the communication apparatus (for example, an RRU) according to any possible implementation of the third aspect and the communication apparatus (for example, a BBU) according to any possible implementation of the fourth aspect. Alternatively, the system may include the communication apparatus (for example, an RRU) according to any possible implementation of the third aspect and the communication apparatus (for example, a BBU) according to any possible implementation of the fifth aspect.

The communication apparatus according to any possible implementation of the third aspect may perform the communication method according to any one of the first aspect and the possible implementations of the first aspect, and the communication apparatus according to any one of the fourth aspect, the fifth aspect, or the possible implementations of the fourth aspect or the fifth aspect may perform the communication method according to any one of the second aspect and the implementations of the second aspect.

It may be understood that any one of the communication device, electronic device, chip, computer-readable storage medium, computer program product, or the like provided above may be used in the corresponding method provided above. Therefore, for beneficial effects that can be achieved by the communication device, electronic device, chip, computer-readable storage medium, computer program product, or the like, refer to beneficial effects in the corresponding method. Details are not described herein again.

These aspects or other aspects in this application are more concise and comprehensible in the following descriptions.

### BRIEF DESCRIPTION OF DRAWINGS

FIG. 1 is a diagram of a universal hardware architecture of a base station according to an embodiment of this application;
FIG. 2 is a diagram of a universal hardware architecture of a base station according to an embodiment of this application;
FIG. 3 is a schematic flowchart of a communication method according to an embodiment of this application;
FIG. 4 is a diagram of channel decoupling in a radio frequency module according to an embodiment of this application;
FIG. 5 is a diagram of channel-level decoupling according to an embodiment of this application;
FIG. 6(a) to FIG. 6(c) are a diagram of channel-level decoupling of 32T according to an embodiment of this application;
FIG. 7 is a diagram of time-frequency domain resources occupied on one subframe when LTE coexists with an older standard like GSM, UMTS, or NB-IoT according to an embodiment of this application;
FIG. 8 is a diagram of channel-level decoupling of radio frequency channels of 32T in a case of multiple standards according to an embodiment of this application;
FIG. 9 is a diagram of module-level digital component decoupling in a radio frequency module according to an embodiment of this application;
FIG. 10 is a diagram of module-level digital component decoupling and radio frequency channel decoupling according to an embodiment of this application;
FIG. 11 is a schematic flowchart of a communication method according to an embodiment of this application;
FIG. 12 is a schematic flowchart of a communication method according to an embodiment of this application;
FIG. 13 is a schematic flowchart of a communication method according to an embodiment of this application;
FIG. 14 is a diagram of a structure of a communication apparatus according to an embodiment of this application; and
FIG. 15 is a diagram of a structure of a communication apparatus according to an embodiment of this application

### DESCRIPTION OF EMBODIMENTS

The following describes the technical solutions in embodiments of this application with reference to the accompanying drawings in embodiments of this application. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "multiple" means two or more.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments, unless otherwise specified, "multiple" means two or more.

For ease of understanding, some concepts related to embodiments of this application are described for reference by using examples. Details are as follows.

A multi-antenna technology may be understood as a spatial multiplexing technology, and can use multiple ports to implement multi-stream transmission, or further implement cell splitting or user-level beamforming, to improve user capacity and user experience.

A radio frequency channel may be usually understood as a channel in a radio frequency module like a remote radio unit (remote radio unit, RRU) or an active antenna unit (active antenna unit, AAU), or may be understood as a channel in another radio frequency module, and may be coupled to an antenna array through a jumper and coupled to a baseband module through an optical fiber.

An antenna array may also be referred to as a phased array or an antenna array, is a group of antennas including multiple antenna elements spatially arranged according to a specific rule, and can obtain a predetermined radiation characteristic through excitation. These antenna elements can achieve higher performance than a single antenna by combining signals with each other.

A cell-level common signal may also be referred to as a basic coverage signal, and can be carried in a basic common channel of a cell, to meet cell camping and access functions of a terminal device that are most basic. The cell camping function includes receiving a system message and a paging message of the cell. The cell-level common signal in this application may be a message, a symbol, or the like carried on a channel.

For example, in a long term evolution (long term evolution, LTE) network, the cell-level common signal may include, but is not limited to, one or more of the following: a cell-specific reference signal (cell-specific reference signal, CRS), a master information block (master information block, MIB), a primary synchronization signal (primary synchronization signal, PSS), a secondary synchronization signal (secondary synchronization signal, SSS), a system information block (system information block, SIB), paging (paging), a common physical downlink control channel (physical downlink control channel, PDCCH), a message 2 (message 2, MSG 2) in a user access process, a message 4 (message 4, MSG 4) in the user access process, a signaling radio bearer 0 (signaling radio bearer 0, SRB 0), a physical control format indicator channel (physical control format indicator channel, PCFICH), and the like.

For example, in a new radio (new radio, NR) network, the cell-level common signal may include a synchronization signal and physical broadcast channel (physical broadcast channel, PBCH) block (synchronization signal and PBCH block, SSB), other system information (other system information, OSI), a remaining minimum system information (remaining SI, RMSI), a paging/common PDCCH, an SRB 0, an MSG 2, an MSG 4, and the like.

A user-level signal may also be referred to as a capacity signal, and includes user-level data information, an auxiliary message or a control message related to the data information, and the like. For example, in LTE, a physical HARQ indicator channel (physical HARQ indicator channel, PHICH), where the HARQ is a hybrid automatic repeat request (hybrid automatic repeat request), a user PDCCH, a channel state information reference signal (channel state information reference signal, CSIRS), a demodulation reference signal (demodulation reference signal, DMRS), a physical downlink shared channel (physical downlink shared channel, PDSCH), a signaling radio bearer 1 (signaling radio bearer 0, SRB 1), a signaling radio bearer 2 (signaling radio bearer 0, SRB 2), and the like may be included.

For example, in NR, the user-level signal may include a user-level CSIRS, a user-level DMRS, a user-level PDSCH, a phase-tracking reference signal (phase-tracking reference signal, PTRS), and the like.

A pilot is also referred to as a reference signal, and used for measurement functions such as channel estimation and phase estimation. For example, the pilot may be the foregoing various reference signals. For another example, in an LTE system, the pilot may be a cell-specific reference signal (cell-specific reference signal, CRS), and is used for reference signal received power (reference signal received power, RSRP) measurement of all user equipment (user equipment, UE) in a cell, channel estimation and demodulation of time-frequency tracking, and the like.

A multi-standard network is a network in which multiple standards coexist, for example, may be a network in which at least two of the following standards coexist: LTE, NR, and a lower standard. An older-standard network is, for example, a global system for mobile communications (global system for mobile communications, GSM), a universal mobile telecommunications system (universal mobile telecommunications system, UMTS), or a narrowband internet of things (narrowband internet of things, NB-IOT).

A channel-level analog component may be understood as an analog component in a radio frequency channel in a radio frequency module, for example, a PA. The radio frequency module may be, for example, in an RRU or an AAU.

A channel-level digital component may be understood as a digital component in a radio frequency channel in a radio frequency module, for example, a crest factor reduction (crest factor reduction, CFR) component, a digital pre-distortion (digital pre-distortion, DPD) component, or a digital-to-analog converter (digital-to-analog converter, DAC).

A module-level digital component may include a digital component in a radio frequency module that does not belong to a radio frequency channel, for example, includes a fronthaul interface. The fronthaul interface may include but is not limited to a common public radio interface (common public radio interface, CPRI), an enhanced common public radio interface (enhanced-CPRI, eCPRI), a fronthaul interface in an open radio access network (open radio access network, O-RAN, or ORAN), or the like. Certainly, another type of digital component may be further included. This is not limited in this application. The fronthaul interface may be understood as an interface between a baseband unit (building base band unit, BBU) and an RRU or an AAU. Optionally, the fronthaul interface may be implemented by using a fronthaul network.

A network architecture in embodiments of this application may include a network device.

The network device in embodiments of this application may be a device having a wireless transceiver function or a chip that can be disposed in the device, and may be deployed in a radio access network to provide a wireless communication service for a terminal device. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission and reception point, TRP, or transmission point, TP), or the like, may be a fifth generation mobile communication technology (5th generation mobile communication technology, 5G), for example, a gNB in an NR system, or a transmission point (TRP or TP), or one antenna panel or a group of antenna panels (including multiple antenna panels) of a base station in a 5G system, may be a network node that forms a gNB or a transmission point, for example, a BBU, an RRU, an AAU, a central unit (central unit, CU), or a distributed unit (distributed unit, DU), or is a vehicle-mounted device, a wearable device, or a network device in a future evolved public land mobile network (public land mobile network, PLMN), and is configured to perform a process of sending a control signal in this application, and the like.

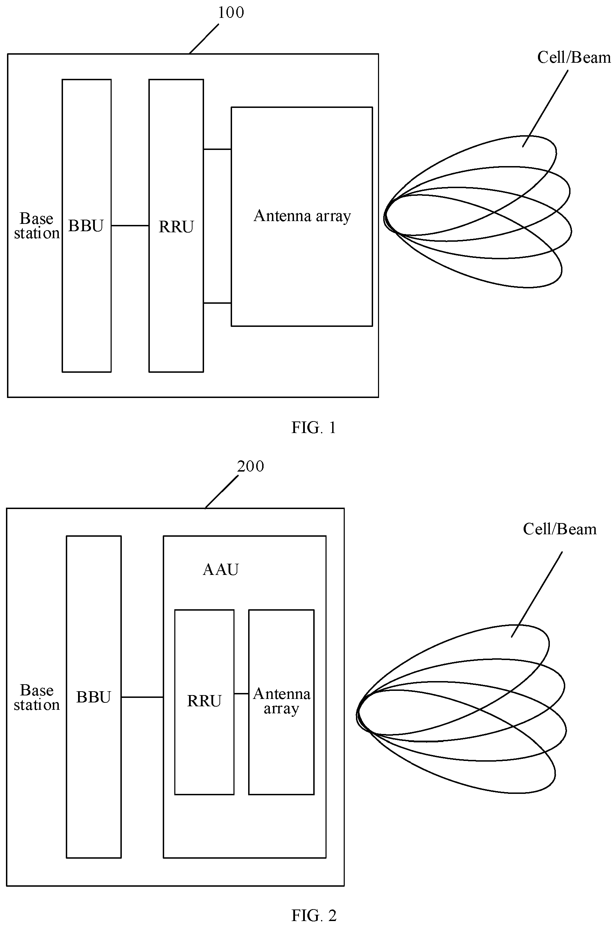

In an example, in a communication system, the base station may be implemented by using a structure of a base station 100 shown in FIG. 1. FIG. 1 shows a universal hardware architecture of a base station. The base station shown in FIG. 1 may include a BBU and an RRU. The RRU is connected to an antenna system (for example, an antenna array in this application). The BBU and the RRU may be separated from each other for use as needed. The antenna system coupled to the RRU may form multiple split cells/beams in the air. One cell may include at least one beam. It should be noted that in a specific implementation process, the base station 100 may alternatively use another universal hardware architecture, and is not limited only to the universal hardware architecture shown in FIG. 1.

Alternatively, the base station may be of a universal hardware architecture of a base station shown in FIG. 2, for example, an NR base station. The base station 200 shown in FIG. 2 may include a BBU and an AAU. The AAU may include an RRU and an antenna system (for example, an antenna array in this application). The antenna system in the AAU may form multiple split cells/beams in the air.

When the network device is a BBU that forms a gNB, the BBU may include a central unit (central unit, CU) and a distributed unit (distributed unit, DU). Multiple DUs may be centrally controlled by one CU. Specifically, division may be performed based on protocol layers of a wireless network. For example, functions of a packet data convergence protocol (packet data convergence protocol, PDCP) layer and a protocol layer (for example, a radio resource control (radio resource control, RRC) and/or a service data adaptation protocol (service data adaptation protocol, SDAP) layer) above the PDCP layer are set on the CU, and functions of protocol layers below the PDCP layer, for example, a radio link control (radio link control, RLC) layer and a medium access control (medium access control, MAC) layer, and/or a physical (physical, PHY) layer, are set on the DU. For another example, the CU implements a function of an RRC layer and/or an SDAP layer, and the DU implements functions of a PDCP layer, an RLC layer, a MAC layer, and a PHY layer. Information at the RRC layer eventually becomes information at the PHY layer, or is converted from the information at the PHY layer. Therefore, in this architecture, higher layer signaling like RRC layer signaling or PHCP layer signaling may also be considered to be sent by the DU or sent by the DU and a radio unit (radio unit, RU). It may be understood that the network device may be a CU node, a DU node, or a device including a CU node and a DU node.

In addition, the CU may be classified as a network device in an access network, or the CU may be classified as a network device in a core network. This is not limited herein.

Alternatively, when the BBU includes the CU, the CU may be divided into a control plane (central unit-Control plane, CU-CP) and a user plane (central unit-User plane, CU-UP). The CU-CP is responsible for a control plane function, and mainly includes an RRC protocol and a PDCP control (PDCP-Control, PDCP-C) protocol. The PDCP-C is mainly responsible for one or more of encryption and decryption, integrity protection, data transmission, and the like of control plane data. The CU-UP is responsible for a user plane function, and mainly includes a service data adaptation protocol (service data adaptation protocol, SDAP) and a PDCP user (PDCP User, PDCP-U) protocol. The SDAP layer is mainly responsible for processing data of the core network and mapping a flow to a bearer. The PDCP-U is mainly responsible for one or more of encryption and decryption, integrity protection, header compression, serial number maintenance, data transmission, and the like of a data plane. The CU-CP and the CU-UP are connected through an interface (for example, an E1 interface). The CU-CP is connected to the core network through an interface (for example, an Ng interface), and is connected to the DU through an interface (for example, F1-C (control plane interface)). The CU-UP is connected to the DU through an interface (for example, F1-U (user plane interface)).

In a possible technology, the base station may reduce power consumption of a radio frequency module through symbol shutdown. In an idle symbol period in which no information is sent (for example, a symbol length is about 70 microseconds (microsecond, µs)), each PA in the AAU/RRU and a channel-level digital component corresponding to the PA may be shut down, so that the power consumption of the radio frequency module is reduced. When a need of a same service volume is met, longer off time of the PA and the channel-level digital component indicates a better energy saving effect. Conversely, shorter off time of the PA and the channel-level digital component indicates a poorer energy saving effect and higher power consumption. However, because a multi-antenna radio frequency module has a large quantity of channels, and there are also large quantities of PAs and related digital components, power consumption of the multi-antenna radio frequency module is still high.

In another technology, the base station may alternatively reduce power consumption of the radio frequency module through channel shutdown. For example, in a channel shutdown technology, some channels in a radio frequency module may be shut down in a low-traffic period based on a traffic volume in a cell, including shutting down a PA and a digital component in the channels. However, in a current base station architecture, according to a channel shutdown method, up to half of channels can be shut down. If more channels need to be shut down, a PA specification is limited. As a result, a common channel power compensation capability is insufficient, a peak-to-average power ratio (peak-to-average power Ratio, PAPR) deteriorates, and the like.

This application provides a communication method and a network device. The network device may decouple channels in a radio frequency module, and decouple radio frequency channels in the radio frequency module into a first radio frequency channel set and a second radio frequency channel set. A radio frequency channel in the first radio frequency channel set is used to carry a first-type signal, and a radio frequency channel in the second radio frequency channel set is used to carry a second-type signal. The first radio frequency channel set and the second radio frequency channel set are different, and functions of the first-type signal and the second-type signal are different. If the first-type signal is a cell-level common signal, and the second-type signal is a user-level signal, cell-level basic coverage may be ensured by using the radio frequency channel in the first radio frequency channel set, some radio frequency channels in the second radio frequency channel set may be activated as needed to generate a user-level signal, and some radio frequency channels may remain shut down. In this way, basic coverage needed by a terminal device is ensured, and power consumption of the radio frequency module can be reduced.

Embodiments of this application may be applied to a time division duplex (time division duplex, TDD) scenario, or may be applied to a frequency division duplex (frequency division duplex, FDD) scenario.

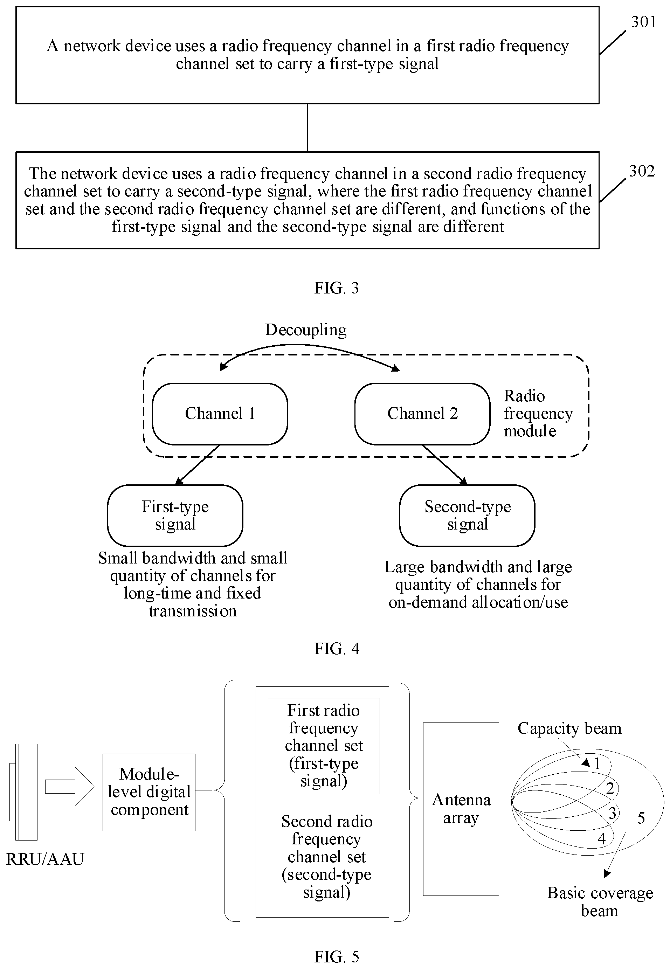

According to the network architecture of this application, FIG. 3 is a schematic flowchart of a communication method according to an embodiment of this application. The communication method may be applied to a radio frequency module. The method includes the following procedure.

301: A network device uses a radio frequency channel in a first radio frequency channel set to carry a first-type signal.

An example in which the network device is an RRU is used for description. The network device may be, for example, an RRU in a base station in LTE, NR, or a network shared by LTE and NR, or the network device may be an RRU in a base station in a communication system in which a newer standard like LTE or NR and an older standard like GSM or UMTS coexist. Similarly, the network device may be an AAU or another possible radio frequency module/device. This is not limited in this application. For ease of description, the RRU is used as an example for description subsequently. When the network device is an AAU or the network device includes an AAU, refer to the descriptions of the RRU. Details are not described.

In some embodiments, the first radio frequency channel set includes one or more radio frequency channels. The first radio frequency channel set may be a set of some radio frequency channels in multiple channels of the radio frequency module. The first radio frequency channel set may also be described as a first radio frequency channel group or another name. This is not limited.

In some embodiments, the first-type signal may be, for example, a cell-level common signal. For the cell-level common signal, refer to the foregoing descriptions. Details are not described again.

302: The network device uses a radio frequency channel in a second radio frequency channel set to carry a second-type signal. The first radio frequency channel set and the second radio frequency channel set are different, and functions of the first-type signal and the second-type signal are different.

In some embodiments, the second radio frequency channel set includes one or more radio frequency channels. The second radio frequency channel set may be a set of all radio frequency channels or some of the radio frequency channels in the radio frequency module. The second radio frequency channel set may also be described as a second radio frequency channel group or another name. This is not limited.

In some embodiments, provided that the first radio frequency channel set and the second radio frequency channel set are not completely the same, it may be considered that the first radio frequency channel set and the second radio frequency channel set are within the scope of embodiments of this application.

In a possible case, there is no intersection set between the first radio frequency channel set and the second radio frequency channel set. For example, the first radio frequency channel set includes a radio frequency channel 1, a radio frequency channel 2, and a radio frequency channel 3, and the second radio frequency channel set includes a radio frequency channel 4, a radio frequency channel 5, and a radio frequency channel 6.

In a possible case, there is an intersection set between the first radio frequency channel set and the second radio frequency channel set. For example, the first radio frequency channel set includes a radio frequency channel 1, a radio frequency channel 2, and a radio frequency channel 3, and the second radio frequency channel set includes a radio frequency channel 1, a radio frequency channel 5, and a radio frequency channel 6. For example, the first radio frequency channel set includes a radio frequency channel 1, a radio frequency channel 2, and a radio frequency channel 3, and the second radio frequency channel set includes a radio frequency channel 1, a radio frequency channel 2, a radio frequency channel 3, a radio frequency channel 4, a radio frequency channel 5, and a radio frequency channel 6. In other words, the first radio frequency channel set may be a subset or a proper subset of the second radio frequency channel set, or the first radio frequency channel set may partially intersect with the second radio frequency channel set, and the intersection set is a proper subset of the first radio frequency channel set or the second radio frequency channel set. This is not limited in this application.

In some embodiments, the second-type signal may be a user-level signal. The user-level signal may be understood as a capacity signal, and the capacity signal includes user-level data information, auxiliary information, control information, and the like.

In some embodiments, using a radio frequency channel in the first radio frequency channel set to carry the first-type signal in step 301 may also be understood as using the radio frequency channel in the first radio frequency channel set to perform transmission of the first-type signal. Using a radio frequency channel in the second radio frequency channel set to carry the second-type signal in step 302 may also be understood as using the radio frequency channel in the second radio frequency channel to perform transmission of the second-type signal. The transmission herein may be sending or receiving.

Therefore, in comparison with a case in which types of signals carried on all radio frequency channels are the same in a conventional technology, in this application, types of signals carried on all radio frequency channels in multiple channels in a radio frequency module are not completely the same. For example, FIG. 4 is a diagram of channel decoupling in a radio frequency module. It is assumed that a channel 1 is one of channels in a first radio frequency channel set, the channel 1 is used to carry a first-type signal, and the first-type signal includes a cell-level common signal. A channel 2 is used to carry a second-type signal, and the second-type signal includes a user-level signal. The channel 2 may be used based on a change of user behavior, and the channel 1 may be transmitted on a fixed time-frequency domain resource for a long time. Alternatively, a channel 3 (not shown in the figure) further exists in the radio frequency module, and may carry both the first-type signal and the second-type signal. It may be understood that the channel 1 may be the same as or different from the channel 2. When the channel 1 is the same as the channel 2, the channel 1 may carry both the first-type signal and the second-type signal. When channel 1 and channel 2 are different, types of signals carried on the two channels are also different.

In some embodiments, the second-type signal may further include a user group-level signal.

For example, FIG. 5 is a diagram of channel-level decoupling. A radio frequency module in an RRU includes a module-level digital component, a first radio frequency channel set, and a second radio frequency channel set. When radio frequency channels in the first radio frequency channel set and the second radio frequency channel set carry signals, a beam may be formed by using an antenna array. When the first-type signal is a cell-level common signal, and the second-type signal is a user-level signal, the first radio frequency channel set may remain activated, and a basic coverage beam 5 may be formed by using some antenna elements in the antenna array. If the second radio frequency channel set includes all radio frequency channels in the radio frequency module, and all the radio frequency channels are activated, multiple capacity beams may be formed by using all antenna elements in the antenna array. For example, the multiple capacity beams include capacity beams 1 to 4. If some radio frequency channels in the second radio frequency channel set are activated, some capacity beams in the capacity beams 1 to 4, for example, a capacity beam 1, may be formed by using some antenna elements in the antenna array.

In some embodiments, the method may further include: The network device determines, based on at least one of a load status on a network side or a signal quality level of a terminal device, a quantity of channels that are in the second radio frequency channel set and that are used to carry the second-type signal. The network device herein may be a BBU in the base station. When determining the quantity of the channels that are in the second radio frequency channel set and that are used to carry the second-type signal, the BBU may control the RRU to carry the second-type signal on a radio frequency channel corresponding to the quantity of channels. For example, for the method herein, refer to the descriptions in step 113 in the following.

For example, when the load status on the network side is lower and/or the signal quality level of the terminal device is higher, the quantity of the channels that are in the second radio frequency channel set and that are used to carry the second-type signal is smaller. In other words, a quantity of shut down channels in the second radio frequency channel set is larger.

Specifically, on a basis that a beamforming effect depends on a quantity of participating radio frequency channels, usually, a larger quantity of activated radio frequency channels indicates a narrower beam obtained through beamforming, and a better anti-interference effect, including reduced interference to a neighboring cell. For example, when the second radio frequency channel set is a set of all the radio frequency channels in the radio frequency module, the second-type signal carried on all the radio frequency channels may form beams 1 to 4 in FIG. 5. However, in a light load scenario, a service volume is low. In this case, only a small quantity of channels may be used to form a wide beam. For example, radio frequency channels in the second radio frequency channel set other than those in the first radio frequency channel set may remain in a shutdown state, or some radio frequency channels in radio frequency channels in the second radio frequency channel set other than those in the first radio frequency channel set may remain in a shutdown state, to reduce power consumption of the radio frequency module.

The load status may be an instantaneous load status. For example, for a load status on a BBU side of an LTE or NR base station, the load status may be determined based on at least one of uplink service load, downlink service load, a buffered data volume, a quantity of accessed users, and the like. The load status may also be reflected based on another parameter. This is not limited in this application. The load status may reflect a service requirement of a cell in the base station, or may be understood as that the service requirement is directly proportional to the load status.

The signal quality level of the terminal device may be determined based on a signal to interference plus noise ratio (signal to interference noise ratio, SINR), a channel quality indicator (channel quality indicator, CQI), or the like. Certainly, the signal quality level may also be reflected based on another parameter. This is not limited in this application. The signal quality level of the terminal device reflects a level of interference the terminal device is exposed to. A higher signal quality level of the terminal device indicates a lower level of interference the terminal device is exposed to.

The determining, by the network device based on at least one of a load status on a network side or a signal quality level of a terminal device, a quantity of channels that are in the second radio frequency channel set and that are used to carry the second-type signal may be periodic. For example, a periodicity may be at a symbol level, a subframe level, a frame level, a millisecond level, a second level, or a minute level. This is not limited. For example, when load on the network side is less than or equal to a first preset threshold, or the signal quality level of the terminal device is greater than or equal to a second preset threshold, a wide beam may be formed by using some channels in the second radio frequency channel set. In this way, the service requirement is met, and an energy saving effect is achieved. Certainly, the wide beam is relative to a narrow beam formed by using all radio frequency channels. For example, a quality level of the second-type signal may depend on a signal-to-noise ratio, a frequency domain resource, a bandwidth resource, space division orthogonality (for example, a quantity of rank (RANK) streams) of the signal, and the like. This is not limited in this application.

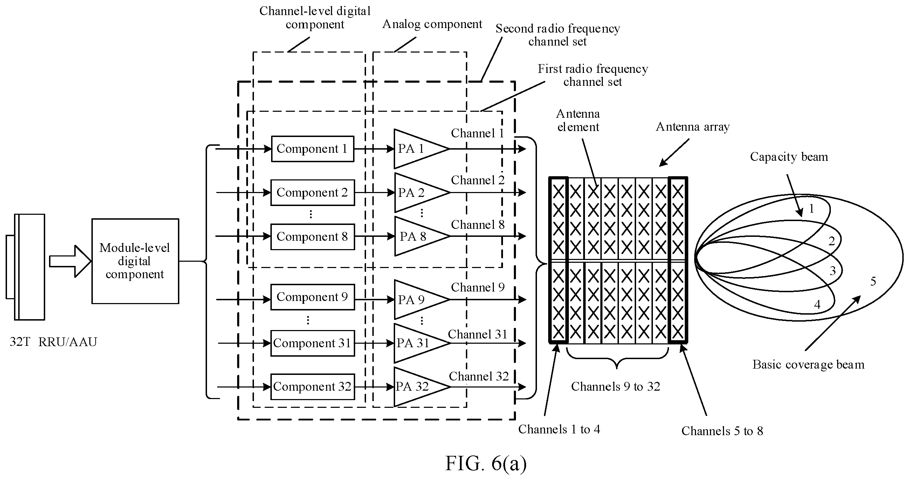

For example, FIG. 6(a) to FIG. 6(c) are a diagram of channel-level decoupling of 32T. As shown in FIG. 6(a) to FIG. 6(c), a radio frequency module in an RRU includes a module-level digital component and 32 radio frequency channels. Each radio frequency channel includes a channel-level digital component (for example, a component 1, a component 2, ..., or a component 32) and an analog component PA (for example, a PA 1, a PA 2, ..., or a PA 32).

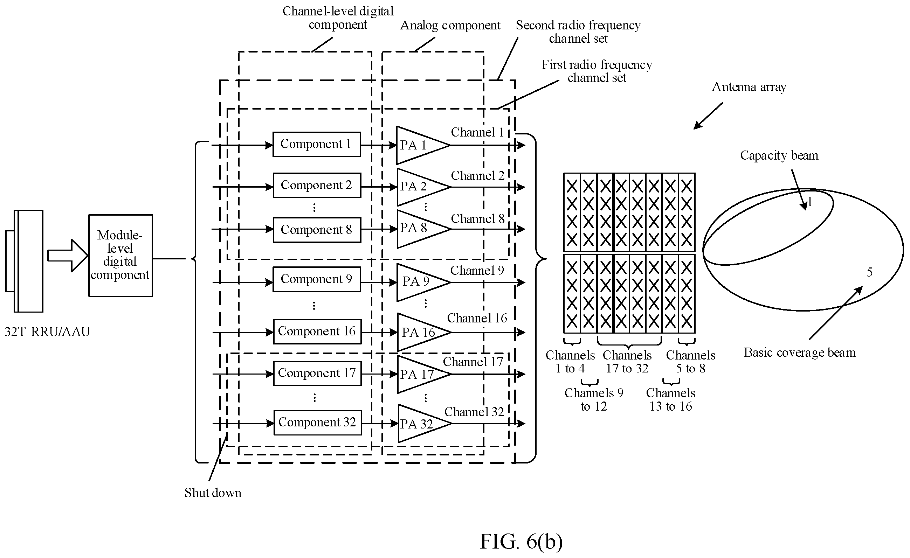

When an antenna array includes a total of 128 antenna elements, and each radio frequency channel may correspond to four antenna elements, if a first radio frequency channel set includes eight radio frequency channels in total, that is, radio frequency channels 1 to 8, to carry a first-type signal, a basic coverage beam 5 may be formed by using 32 antenna elements (for example, antenna elements at side column positions) in the antenna array. The basic coverage beam 5 may be continuously activated and used 24 hours a day, to ensure camping and access of a terminal device that are most basic in a cell of the RRU. A second radio frequency channel set includes all radio frequency channels 1 to 32, and there are 32 radio frequency channels in total. FIG. 6(a) shows that when all the 32 radio frequency channels are activated, a second-type signal carried on the 32 radio frequency channels may form capacity beams 1 to 4 by using the 128 antenna elements in the antenna array. However, the capacity beams 1 to 4 are not continuously used all day. A BBU side indicates, based on at least one of a load status and a signal quality level of the terminal device, the RRU to enable the radio frequency channels in the second radio frequency channel set as needed. FIG. 6(b) is a diagram of activating some channels in the second radio frequency channel set to carry a user-level signal. When load on a network side is less than or equal to a first preset threshold, or the signal quality level of the terminal device is greater than or equal to a second preset threshold, the BBU may indicate the RRU to activate radio frequency channels 1 to 16 in the second radio frequency channel set to carry a second-type signal, and radio frequency channels 17 to 32 may remain in a shutdown state. In this case, the RRU may use 64 antennas corresponding to the radio frequency channels 1 to 16 to form a wide capacity beam 1, so as to meet a service requirement. If no other terminal device has a service requirement after a terminal device in a coverage area of the capacity beam 1 ends a service, that is, when load of the capacity beam 1 is 0, if the radio frequency channels 1 to 8 that ensure basic coverage are controlled to be activated, the BBU may indicate the RRU to configure radio frequency channels 9 to 32 to be in a shutdown state for a long time, so as to greatly reduce power consumption of the radio frequency module.

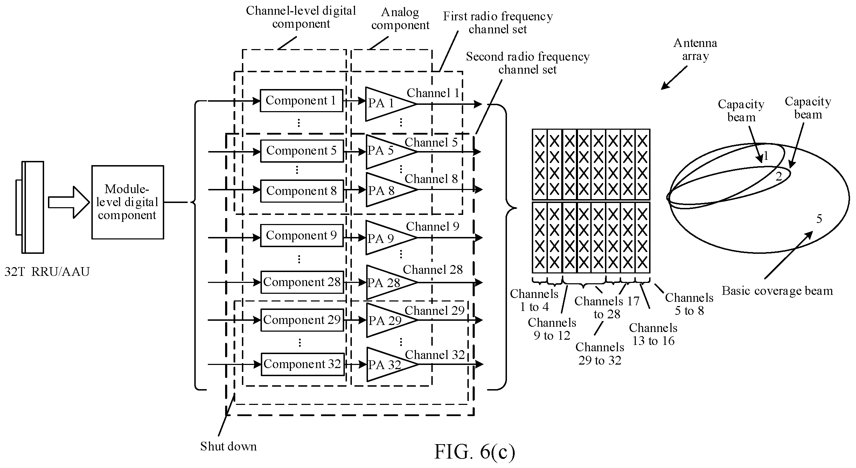

Optionally, in both FIG. 6(a) and FIG. 6(b), an example in which the second radio frequency channel set is a set of all radio frequency channels in the radio frequency module having 32 radio frequency channels is used for description. As described above, the second radio frequency channel set may include one or more radio frequency channels, that is, a quantity of second radio frequency channel sets may be less than 32. FIG. 6(c) shows that in a radio frequency module having 32 radio frequency channels, a first radio frequency channel set includes radio frequency channels 1 to 8, the radio frequency channels 1 to 8 carry a first-type signal, a second radio frequency channel set includes radio frequency channels 5 to 32, and the radio frequency channels 5 to 32 carry a second-type signal. In other words, the first radio frequency channel set partially intersects with the second radio frequency channel set. To be specific, the intersection set between the first radio frequency channel set and the second radio frequency channel set is a proper subset of any one of the first radio frequency channel set and the second radio frequency channel set. Certainly, a union set of the first radio frequency channel set and the second radio frequency channel set may be less than a quantity of all radio frequency channel sets in a network device. This is not limited in this application. In FIG. 6(c), an example in which the union set of the first radio frequency channel set and the second radio frequency channel set is equal to the quantity of all the radio frequency channel sets in the network device is used for description. When an antenna array includes a total of 128 antenna elements, and each radio frequency channel may correspond to four antenna elements, a basic coverage beam 5 may be formed by using 32 antenna elements (for example, antenna elements at side column positions) in the antenna array that correspond to radio frequency channels 1 to 8. Radio frequency channels 5 to 32 may be activated as needed. For example, when load on a network side is high or a signal quality level of a terminal device is poor, a BBU may indicate an RRU to activate all the radio frequency channels 5 to 32 to carry the second-type signal, and the second-type signal carried on the 28 radio frequency channels may form multiple capacity beams (for example, the capacity beams 1 to 4 in the foregoing descriptions) by using 112 antenna elements in the antenna array. When the load on the network side is less than or equal to the first preset threshold, or the signal quality level of the terminal device is greater than or equal to the second preset threshold, the BBU may indicate the RRU to activate radio frequency channels 5 to 28, and keep radio frequency channels 29 to 32 in a shutdown state. In this case, the RRU may use 96 antennas corresponding to the radio frequency channels 5 to 28 to form a wide capacity beam 1 and a narrow capacity beam 2, so as to meet a service requirement. It should be understood that any threshold in this application may be set based on an actual requirement, or may be set to a factory setting. This is not limited in this application. In addition, the first radio frequency channel set may include 1 to 8, and the second radio frequency channel set may include 9 to 32, or the second radio frequency channel set may include a part of 9 to 32. In this case, there is no intersection set between the first radio frequency channel set and the second radio frequency channel set. This is also applicable to the communication apparatus and method shown in this application. Details are not described.

In some embodiments, in a scenario of a network in which multiple standards coexist, the first-type signal includes a first-type signal in the multi-standard network. Further, the first radio frequency channel set carrying the first-type signal may also be used to carry a second-type signal of a part of standards in the multi-standard network. It may be understood that the multi-standard network may be a network supporting any two standards. For example, the multi-standard network may support an NR standard and an LTE standard, or may support an LTE standard and a UMTS standard. In other words, the multi-standard network may support multiple newer standards, or may support a newer standard and an older standard. This is not limited in this application.

For example, for a terminal device using an NR standard, the terminal device performs channel estimation and demodulation by using a user-level pilot, and the user-level pilot is a user-level signal. Therefore, radio frequency channels that are in the second radio frequency channel set and that are used to carry the user-level pilot may be any quantity of radio frequency channels activated as needed. For example, the second radio frequency channel set includes all radio frequency channels in a radio frequency module. However, for a terminal device using an older standard like UMT S, the terminal device performs channel estimation and demodulation by using a cell-level common pilot, and the cell-level common pilot is a cell-level common signal. A radio frequency channel carrying a user-level signal needs to be the same as a radio frequency channel carrying a cell-level common pilot. Therefore, the second radio frequency channel set may use a channel that is the same as the first radio frequency channel set to form a same beam shape. For example, the radio frequency module shown in FIG. 6(a) to FIG. 6(c) may use the radio frequency channels 1 to 8 as the first radio frequency channel set and the second radio frequency channel set. In other words, when a communication system includes both an older-standard communication mode and a newer-standard communication mode, that is, in a case of the network in which multiple standards coexist, a second-type signal and a second-type signal that correspond to an older standard share a radio frequency channel in the first radio frequency channel set. A first-type signal corresponding to a higher standard is carried by using the radio frequency channel in the first radio frequency channel set, and a second-type signal corresponding to the higher standard is carried by using a radio frequency channel in the second radio frequency channel set. For example, there is no intersection set between the first radio frequency channel set and the radio frequency channel that is in the second radio frequency channel set and that is used to carry the second-type signal corresponding to the newer standard.

In addition, for example, when the terminal device performs communication by using a transmission mode (transmission mode, TM) 7/TM 8/TM 9/TM 10 or even a higher transmission mode in LTE, for a cell-level signal and a user-level signal in these transmission modes, refer to the descriptions of the cell-level signal and the user-level signal in the foregoing newer standard. When the terminal device performs communication by using a transmission mode like a TM 1\TM 2\TM 3\TM 4\TM 5 in LTE, for a cell-level signal and a user-level signal in these transmission modes, refer to the descriptions of the cell-level signal and the user-level signal in the foregoing older standard. In other words, the foregoing different standards may alternatively support different transmission modes. When the transmission modes are different, any transmission mode or standard is applicable to the method and the architecture shown in this application, provided that a user-level signal and a cell-level signal in the transmission mode or standard support separate and independent use of different types of channels for carrying.

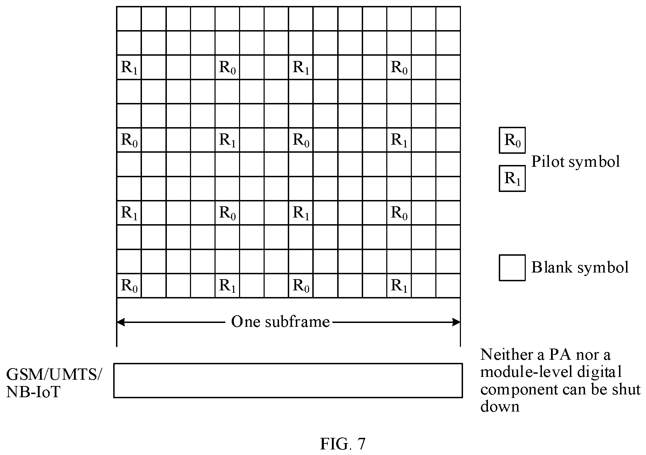

For example, the multi-standard network supports a newer standard like LTE and/or NR, and any one or more older standards such as GSM, UMTS, and NB-IoT. In a current base station architecture, data of an older standard like GSM, UMTS, or NB-IoT needs to be continuously transmitted, and all digital components and PAs in a radio frequency channel need to work continuously. A symbol shutdown technology of LTE and NR cannot take effect, and all digital components and PAs in a channel need to work continuously. For example, FIG. 7 is a diagram of time-frequency domain resources occupied on one subframe (for example, 1 ms, 14 symbols, and 12 subcarriers) when LTE coexists with an older standard like GSM, UMTS, or NB-IoT in the current base station architecture. It can be learned that one subframe may include pilot symbols (R0 and R1) and blank symbols. The symbol shutdown technology may be understood as: In a pilot symbol period of LTE and NR, a PA and a channel-level digital component corresponding to the PA may be activated. In a blank symbol period, the PA and the channel-level digital component corresponding to the PA may be shut down to obtain energy saving gains. However, in a case of a network in which LTE or NR coexists with an older standard like GSM, UMTS, or NB-IoT coexist, all symbols in one subframe may be used for carrying a signal of the older standard like GSM, UMTS, or NB-IoT. The symbol shutdown technology cannot be used to shut down the PA and the channel-level digital component, resulting in high power consumption of a radio frequency module.

In a communication system in which the newer standard and the older standard coexist, the older-standard communication mode cannot use the symbol shutdown technology. In addition, because channel shutdown may also be considered as symbol shutdown, a radio frequency channel carrying the older standard needs to be continuously activated, and the channel shutdown cannot be performed. However, when the radio frequency channel in the first radio frequency channel set in this application can be continuously activated, in this application, a radio frequency channel carrying the older standard like GSM, UMTS, or NB-IoT may be mapped to a radio frequency channel in the continuously activated first radio frequency channel set. For example, when LTE or NR coexists with the older standard like GSM, UMTS, or NB-IoT, the first-type signal carried on the radio frequency channel in the first radio frequency channel set may include a first-type signal of LTE or NR, and may further include a first-type signal of the older standard like GSM, UMTS, or NB-IoT. In this way, a quantity of activated channels in the second radio frequency channel set may be determined based on factors such as a load status on a network side and a signal quality level of a terminal device in the newer-standard communication mode. This can avoid a case in which a channel component in an older-standard network cannot be shut down, increase a proportion of shutting down a radio frequency channel, and reduce power consumption of the radio frequency module.

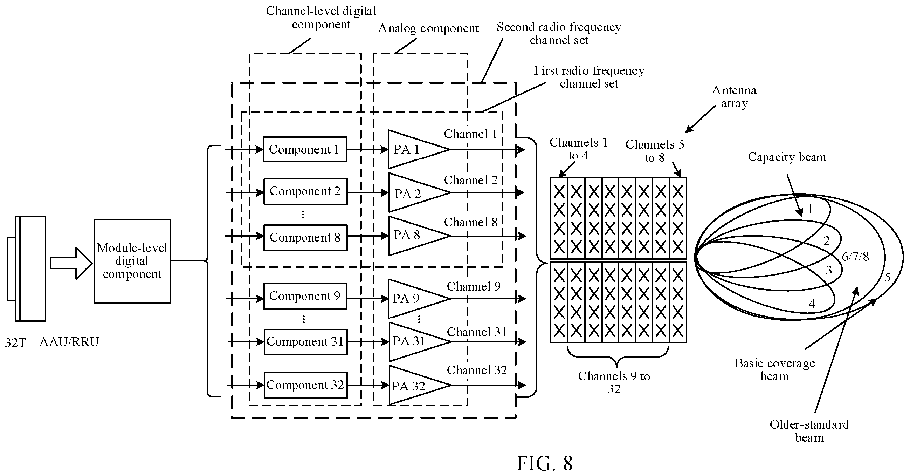

Based on this, FIG. 8 is a diagram of channel-level decoupling of radio frequency channels of 32T in a case of multiple standards. Radio frequency channels 1 to 8 in a first radio frequency channel set may carry a cell-level common signal, and a basic coverage beam 5 is formed by using antennas (for example, 32 antennas occupying a side column) corresponding to the radio frequency channels 1 to 8. When the radio frequency channels 1 to 8 in the first radio frequency channel set are further used to carry a user-level signal of an older standard like GSM, UMTS, or NB-IoT, beams corresponding to the older standard, for example, a beam 6, a beam 7, and a beam 8, are formed by using the antennas corresponding to the radio frequency channels 1 to 8. When all radio frequency channels 1 to 32 in a second radio frequency channel set are activated, a user-level signal of an LTE or NR standard carried on the radio frequency channel in the second radio frequency channel set may form capacity beams 1 to 4 by using all 128 antennas in an antenna array.

Certainly, with reference to FIG. 8, in a multi-standard network, the beams 1 to 4 may still be formed as needed, similar to a scenario in which there is only LTE or NR. To be specific, in a light load scenario of multiple standards, if only a wide beam 1 needs to be activated to meet a service requirement, only half of radio frequency channels (radio frequency channels 1 to 16) in the radio frequency channels 1 to 32 may be activated to form the beam 1, and radio frequency channels 17 to 32 may remain in a shutdown state.

In some embodiments, the network device may use the first radio frequency channel set to carry the first-type signal and the second-type signal in a time division and/or frequency division manner. The first-type signal includes a first-type signal of any one or more standards in the multi-standard network, and the second-type signal includes a second-type signal of a newer standard in the multi-standard network. The network device may be, for example, an AAU or an RRU. The second radio frequency channel set may also carry the second-type signal in a time division and/or frequency division manner. This is not limited in this application. It should be understood that, with evolution of a standard of the communication system, a first-type signal in any communication standard that supports time division and/or frequency division is applicable to the method in this application, and a second-type signal is similar.

For example, when the first-type signal is a cell-level common signal, the cell-level common signal is periodically sent at intervals. For example, in one subframe shown in FIG. 7, the pilot symbols do not occupy all time domain and frequency domain resources of the subframe, and there are also blank symbols. Therefore, in this embodiment of this application, the first radio frequency channel set carrying the first-type signal may also carry the second-type signal in the time division and/or frequency division manner.

To be specific, if some activated radio frequency channels in the second radio frequency channel set include the first radio frequency channel set, or some activated radio frequency channels in the second radio frequency channel set include some radio frequency channels in the first radio frequency channel set, the first radio frequency channel set may carry the first-type signal on a time domain resource and/or a frequency domain resource (for example, a pilot symbol) used for sending the first-type signal, and carry the second-type signal on a time domain resource and/or a frequency domain resource that are/is not used for sending the first-type signal and that are/is in a radio frequency channel in activated radio frequency channels included in the second radio frequency channel set. For example, the second-type signal may be carried on a blank symbol.

Certainly, in the multi-standard network, when the first radio frequency channel set in the RRU is used to carry the first-type signal and the second-type signal in the time division and/or frequency division manner, the first-type signal may include a first-type signal in the multi-standard network, and the second-type signal may include a second-type signal in the multi-standard network.

In some embodiments, power of an analog component in the radio frequency channel in the first radio frequency channel set is greater than or equal to power of an analog component in a radio frequency channel that is in the second radio frequency channel set and that carries the second-type signal but does not carry the first-type signal.

This is because a cell-level common signal used for basic coverage, like a CRS or an SSB, occupies a specific resource element (resource element, RE) in time-frequency domain, and does not use a very large part of time domain or frequency domain resources as a data part (for example, a PDSCH) that carries a user-level signal. One RE may correspondingly occupy one subcarrier in frequency domain, and occupy one symbol period in time domain. Therefore, to achieve the following effect, to be specific, in a base station architecture in this application, when the first-type signal is a cell-level common signal, in a possible scenario, if a quantity of radio frequency channels that are in the first radio frequency channel set and that carry the first-type signal is less than a quantity of radio frequency channels in a current base station architecture, that is, only a few radio frequency channels are occupied, a basic coverage capability in the base station architecture in this application can still be ensured not weaker than a basic coverage capability in the current base station architecture. For example, in this application, for the first radio frequency channel set, the power of the analog component in the radio frequency channel in the first radio frequency channel set is greater than or equal to the power of the analog component in the radio frequency channel that is in the second radio frequency channel set and that carries the second-type signal but does not carry the first-type signal.

For example, total power of a PA in the first radio frequency channel set carrying the first-type signal is twice total power of a PA in the radio frequency channel that is in the second radio frequency channel set that carries only the second-type signal. A channel-level decoupling status of a radio frequency module of 32T shown in FIG. 8 is used as an example. When the radio frequency channels 1 to 8 are used to carry the cell-level common signal, power of a PA in each radio frequency channel may be configured to 20 w. When radio frequency channels 9 to 32 are used to carry only the user-level signal, power of a PA in each radio frequency channel may be configured to 10 w.

In some embodiments, a key factor for determining a coverage capability of the cell-level common signal is power spectral density. Therefore, for an analog component that is in the first radio frequency channel set and that carries the cell-level common signal, power intensity (power spectral density) of the cell-level common signal may be improved as much as possible by using a power aggregation method when total power of the network device is limited, to achieve a good coverage effect.

Therefore, in this embodiment of this application, in this application, power aggregation may be further performed on the analog component (for example, a PA) in the first radio frequency channel set, to carry the cell-level common signal on the radio frequency channel based on power obtained through power aggregation. The power aggregation means that a higher power spectral density is configured on some specific frequency domain resources when overall bandwidth power of the network device remains unchanged. For example, it is assumed that total power of an entire bandwidth of the RRU is 0.2 w. Before power aggregation, in a basic power configuration, the entire bandwidth occupies 12 REs in frequency domain, the bandwidth is 180 kHz, and a power spectral density of each PA in the radio frequency module is 1x[10]^(-3) w/kHz. After power aggregation is performed, the total power of the entire bandwidth is still 0.2 w, the first radio frequency channel set may occupy four REs in frequency domain, a bandwidth is 60 kHz, and the power spectral density of each PA is 3x[10]^(-3) w/kHz.

In this way, for example, for the cell-level common signal: the CRS or the SSB, a core factor for determining a coverage capability of a signal like the CRS or the SSB is power intensity, that is, power spectral density, on an RE corresponding to the signal like the CRS or the SSB. Higher power spectral density indicates a better coverage effect of the signal like the CRS or the SSB.

Therefore, in this embodiment of this application, to ensure that the basic coverage of the cell-level common signal remains unchanged, an analog component carrying a basic coverage function may be configured with higher power than an analog component carrying the user-level signal, that is, an analog component carrying a capacity function, or can support a higher power aggregation capability, so that power of an RE at a specific frequency domain position corresponding to a common channel can be increased, to ensure that the basic coverage is not affected relative to an existing base station architecture. In comparison with the conventional technology in which downlink transmit power capabilities of PAs in all radio frequency channels are equal, in this application, downlink transmit power of a PA in the first radio frequency channel set is higher than power of a PA in the radio frequency channel that is in the second radio frequency channel set and that carries the second-type signal but does not carry the first-type signal.

The foregoing embodiment may be understood as performing channel-level decoupling on radio frequency channels in the radio frequency module. In an embodiment of this application, virtual or physical decoupling may also be performed on module-level digital components in the radio frequency module.

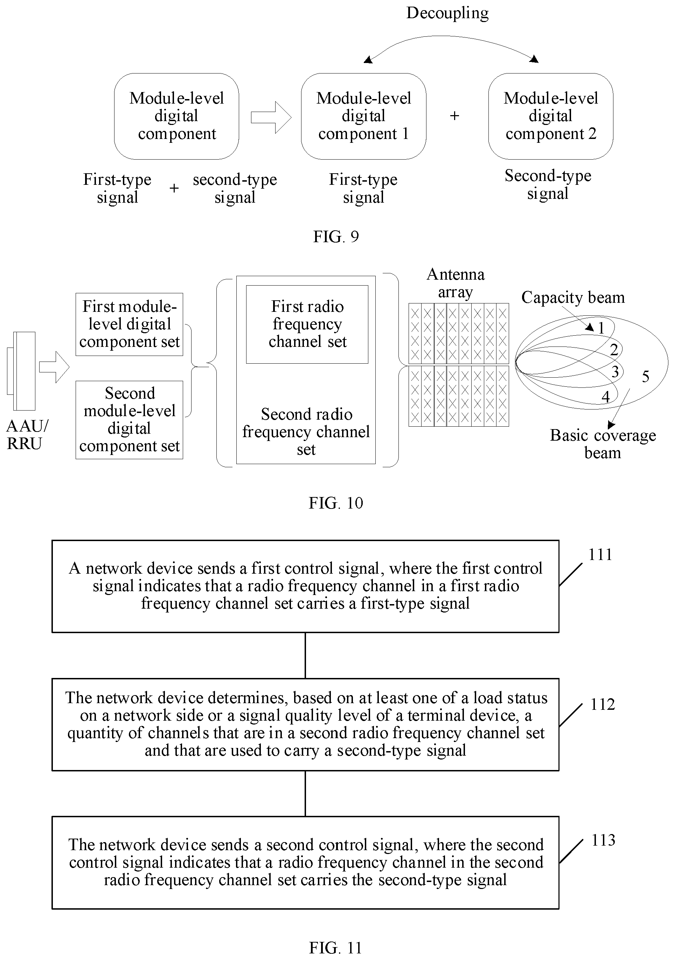

FIG. 9 is a diagram of module-level digital component decoupling in a radio frequency module. For example, a module-level digital component includes a module-level digital component 1 and a module-level digital component 2. The module-level digital component 1 is configured to carry a first-type signal, for example, a cell-level common signal, and the module-level digital component 2 is configured to carry a second-type signal, for example, a user-level signal. Definitely, a module-level digital component 3 (not shown in the figure) may also exist, configured to carry the first-type signal, and also carry the second-type signal.

In some embodiments, FIG. 10 is a diagram of module-level digital component decoupling and radio frequency channel decoupling. A first radio frequency channel set is coupled to a first module-level digital component set, a second radio frequency channel set is coupled to a second module-level digital component set, and the first module-level digital component set and the second module-level digital component set are different.

In this way, refer to FIG. 10. Analog components and digital components in both the first module-level digital component set and the first radio frequency channel set may carry a cell-level common signal, and a basic coverage beam 5 is formed by using some antennas in an antenna array. Analog components and digital components in both the second module-level digital component set and the second radio frequency channel set may carry a user-level signal, and some second module-level digital components in the second module-level digital component set coupled to the second radio frequency channel set may be shut down as needed, to form at least one capacity beam in capacity beams 1 to 4 by using some antennas in the antenna array.

In other words, when the second module-level digital component set is coupled to the second radio frequency channel set, a module-level digital component coupled to a shut down radio frequency channel in the second radio frequency channel set may also enter an off state when load is light, to further reduce power consumption of a radio frequency module.

In some embodiments, the digital component set in this application may include a fronthaul interface. For example, the fronthaul interface is an interface between a BBU and an RRU, or an interface between a BBU and an AAU. In other words, the fronthaul interface may be a CPRI interface, or may be an eCPRI interface.

In some embodiments, antenna elements corresponding to the first radio frequency channel set are discretely distributed.

For example, the antenna elements corresponding to the first radio frequency channel set carrying the first-type signal may be configured at side column positions on both horizontal side of the antenna element. For example, refer to FIG. 6(a) to FIG. 6(c) or FIG. 8 in this application. Antenna elements corresponding to radio frequency channels 1 to 4 included in the first radio frequency channel set occupy 16 antenna elements at side column positions on one side, and antenna elements corresponding to radio frequency channels 5 to 8 occupy 16 antenna elements at side column positions on the other side.

This is because if antenna elements transmitting a same signal need to form a beam that converges as much as possible, a spacing between these antenna elements in a horizontal direction needs to be long. However, in this embodiment of this application, a quantity of radio frequency channels carrying a cell-level common signal is reduced. Therefore, to still maintain a converged shape of a basic coverage beam in the horizontal direction within a range of an antenna array of a limited antenna installation platform, for example, to form a beam with a horizontal beamwidth of 65°, a horizontal distance between antenna elements transmitting the cell-level common signal needs to be greater than or equal to a specific threshold.

In this application, when an overall structure of the antenna installation platform remains unchanged, antenna elements corresponding to the channels carrying the cell-level common signal may be configured at side column positions on both horizontal sides of the antenna installation platform. Therefore, the converged beam shape may be formed in this manner.

For example, when the antenna elements transmitting the cell-level common signal are located at side columns of the antenna installation platform, a basic coverage beam formed by the cell-level common signal by using the antenna elements at the side columns may have a 3 dB beamwidth of approximately 65° in the horizontal direction. When the antenna elements transmitting the cell-level common signal are located at middle columns of the antenna installation platform, a basic coverage beam formed by the cell-level common signal by using the antenna elements at the middle columns may have a 3 dB beamwidth of approximately 100° in the horizontal direction. In this way, if the antenna elements corresponding to the radio frequency channels that transmit the cell-level common signal are configured at the middle columns of the antenna installation platform, the basic coverage beam is broadened. Consequently, strong interference may be caused to a neighboring cell, and network performance deteriorates.

Although the foregoing embodiments are described by using an example in which the antenna elements corresponding to the first radio frequency channel set are located at the side column positions of the antenna installation platform, it should be understood that the antenna elements corresponding to the first radio frequency channel set may not be located at the side column positions of the antenna installation platform, provided that a distance between positions of the antenna elements corresponding to the first radio frequency channel set is greater than or equal to the specific threshold.

In some embodiments, there are at least two radio frequency channels in the first radio frequency channel set, provided that there is a radio frequency channel that is between the two radio frequency channels and that is not included in the first radio frequency channel set. In other words, antenna elements corresponding to the two radio frequency channels may have multiple possible positions. This is not limited in this application, provided that the two radio frequency channels are not adjacent.

Therefore, in this embodiment of this application, radio frequency channels in a radio frequency module are decoupled based on types of carried signals, so that radio frequency channel sets that carry different types of signals are different. In comparison with the conventional technology in which types of signals carried on all radio frequency channels are the same, in this application, when the first radio frequency channel set carries the first-type signal and the second radio frequency channel set carries the second-type signal, for example, when the first-type signal is a cell-level common signal, because this type of signal is a deterministic signal and needs to be sent at a fixed moment to meet a basic service requirement, and is irrelevant to a quantity of transmitted user-level signals, to meet basic coverage, radio frequency channels in the first radio frequency channel set may remain activated, and radio frequency channels in the second radio frequency channel set may be activated as needed, and some radio frequency channels may remain shut down. In this way, power consumption of the radio frequency module can be reduced when multiple channels are decoupled based on types of signals. For example, user-level signals may change with a traffic requirement, being transmitted less in a light-load time period and more in a high-load time period. In this case, when traffic is light, some channels carrying the user-level signal may be shut down, to reduce power consumption. In addition, the cell-level common signal is periodically sent at intervals, and does not occupy all time domain and frequency domain resources. Therefore, the user-level signal, or a capacity (experience) signal, may also be sent in a channel carrying the cell-level common signal.

The network device in FIG. 3 is a radio frequency module/apparatus. An RRU or an AAU is used as an example for description. A first radio frequency channel set carrying a first-type signal that is on an RRU or AAU side and a second radio frequency channel set carrying a second-type signal may be configured by a baseband processing unit, for example, a BBU side. The baseband processing unit may also be referred to as a baseband processing device/module, or may be understood as a module, a device, or a circuit that can be used in or installed in a baseband processing unit like a BBU, or may be a base station including a BBU. The foregoing descriptions are applicable to any embodiment of this application, and details are not described again. Therefore, based on the foregoing embodiments, FIG. 11 is a schematic flowchart of a communication method according to an embodiment of this application. The method includes the following procedure.

111: A network device sends a first control signal, where the first control signal indicates that a radio frequency channel in a first radio frequency channel set carries a first-type signal.

When the network device in the embodiment corresponding to FIG. 11 is a BBU, it may be understood that the BBU sends the first control signal to an RRU. Correspondingly, the RRU receives the first control signal sent by the BBU. The following uses the BBU as an example for description.

For example, in an LTE or NR network, the BBU may send the first control signal to the RRU, to indicate the RRU to use the radio frequency channel in the first radio frequency channel set to carry a first-type signal used for basic coverage in the LTE or NR network.

For example, the first control signal includes a channel identifier of the radio frequency channel in the first radio frequency channel set, and may further include indication information of a signal type of the first-type signal. For an example of the first radio frequency channel set, refer to the descriptions in step 904.

Step 301 may be performed after step 111.

112: The network device determines, based on at least one of a load status on a network side or a signal quality level of a terminal device, a quantity of channels that are in a second radio frequency channel set and that are used to carry a second-type signal.

For an implementation of step 112, refer to the example descriptions in the foregoing embodiment.

113: The network device sends a second control signal, where the second control signal indicates that a radio frequency channel in the second radio frequency channel set carries the second-type signal.

For example, the BBU sends the second control signal to the RRU, and correspondingly, the RRU receives the second control signal sent by the BBU.

Similar to the first control signal, the second control signal includes a channel identifier of the radio frequency channel in the second radio frequency channel set, and may further include indication information of a signal type of the second-type signal.

For a specific implementation in the embodiment corresponding to FIG. 11, refer to the foregoing descriptions of the embodiment corresponding to FIG. 3.

Step 302 may be performed after step 113.

Therefore, when the BBU performs channel decoupling configuration on the RRU, the RRU may use the radio frequency channel in the first radio frequency channel set to carry the first-type signal, and use the radio frequency channel in the second radio frequency channel set to carry the second-type signal. When the first-type signal is a cell-level common signal, basic camping and access of a terminal device in a cell can be ensured. When the second-type signal is a user-level signal, some radio frequency channels in the second radio frequency channel set may be activated as needed, and some radio frequency channels remain shut down, to reduce power consumption of a radio frequency module.

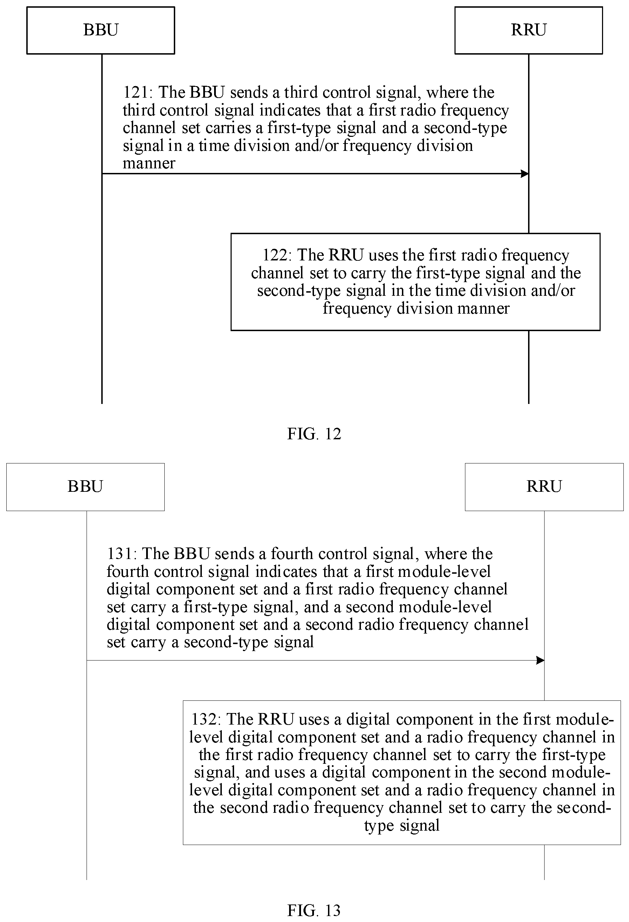

In some embodiments, corresponding to the foregoing embodiment, an RRU or AAU radio frequency module/apparatus may use the first radio frequency channel set to carry the first-type signal and the second-type signal in a time division and/or frequency division manner. This may be configured by the baseband processing unit. FIG. 12 is a schematic flowchart of a communication method according to an embodiment of this application. For example, a network device includes a BBU and an RRU. The method may further include the following procedure.

121: The BBU sends a third control signal, where the third control signal indicates that a first radio frequency channel set carries a first-type signal and a second-type signal in a time division and/or frequency division manner.

Correspondingly, the RRU receives the third control signal.

122: The RRU uses the first radio frequency channel set to carry the first-type signal and the second-type signal in the time division and/or frequency division manner.

In some embodiments, in the first radio frequency channel set, some radio frequency channels in the first radio frequency channel set may alternatively carry the first-type signal and the second-type signal in a multi-standard network in the time division and/or frequency division manner.

For specific implementation of step 122, refer to the specific descriptions in step 302 in the foregoing embodiment that the RRU uses the first radio frequency channel set to carry the first-type signal and the second-type signal in the time division and/or frequency division manner.

In some embodiments, corresponding to the foregoing embodiment, the RRU uses a first module-level digital component set and the first radio frequency channel set to carry the first-type signal, and a second module-level digital component set and the second radio frequency channel set carrying the second-type signal may be configured by the BBU. FIG. 13 is a schematic flowchart of a communication method according to an embodiment of this application. For example, a network device includes a BBU and an RRU. The method may further include the following procedure.

131: The BBU sends a fourth control signal, where the fourth control signal indicates that a first module-level digital component set and a first radio frequency channel set carry a first-type signal, and a second module-level digital component set and a second radio frequency channel set carry a second-type signal.

Correspondingly, the RRU receives the fourth control signal.

The first radio frequency channel set is coupled to the first module-level digital component set, the second radio frequency channel set is coupled to the second module-level digital component set, and the first module-level digital component set and the second module-level digital component set are different.

132: The RRU uses a digital component in the first module-level digital component set and a radio frequency channel in the first radio frequency channel set to carry the first-type signal, and uses a digital component in the second module-level digital component set and a radio frequency channel in the second radio frequency channel set to carry the second-type signal.

For a specific implementation of step 132, refer to the specific descriptions in step 302 in the foregoing embodiment that the RRU uses the digital component in the first module-level digital component set and the radio frequency channel in the first radio frequency channel set to carry the first-type signal, and uses the digital component in the second module-level digital component set and the radio frequency channel in the second radio frequency channel set to carry the second-type signal.

In addition, in this embodiment of this application, an example in which the first radio frequency channel set and the second radio frequency channel set have partially overlapped radio frequency channels is used for description. However, in some scenarios, the first radio frequency channel set and the second radio frequency channel set may not overlap at all. For example, for the radio frequency module of 32T in the foregoing embodiment, the radio frequency channels 1 to 8 may be the first radio frequency channel set, and the radio frequency channels 9 to 32 are the second radio frequency channel set. In some other scenarios, when module-level digital components are also decoupled with radio frequency channels, the first module-level digital component set and the second module-level digital component set may not overlap at all either.

In conclusion, because a cell-level common signal and a user-level signal are decoupled in this application, when it is ensured that radio frequency channels carrying the cell-level common signal are activated all day, a part of radio frequency channels carrying the user-level signal may be adaptively shut down. In this way, from a 24-hour service distribution perspective, most radio frequency channels, including digital components and analog components in the radio frequency channels, are shut down in a light-load or an idle time period. This can greatly increase a shutdown duration of the radio frequency channels, to improve an energy saving effect. In other words, for a capacity beam, the capacity beam may be quickly activated and used as needed based on a change of a service volume or interference, and the capacity beam may be wide or narrow. A capacity beam in this base station architecture in this application is equivalent to a capacity beam in a conventional base station architecture, and high-capacity and high-experience capabilities are not lost, so that user experience is not lost.

In this application, when an older-standard signal is transmitted on the radio frequency channel carrying the cell-level common signal, transmitting of the older-standard signal is not affected, and some radio frequency channels carrying the user-level signal may be adaptively selected to be shut down.

In this application, when the module-level digital components are decoupled based on the cell-level common signal and the user-level signal, similar to radio frequency channel decoupling, when a basic coverage capability is ensured, a part of module-level digital components carrying the user-level signal may be adaptively shut down, to achieve an energy saving effect.

In this application, when higher power is configured for a PA in the radio frequency channel that carries the cell-level common signal, and an antenna element corresponding to the channel carrying the cell-level common signal is located at a side column position in a horizontal direction of an antenna installation platform, a basic coverage capability in the base station architecture in this application can be equivalent to a basic coverage capability in an existing base station architecture through power and aggregation capability improvement, side column deployment, and the like, to ensure stability of a basic key performance indicator (key performance indicator, KPI).

In addition, the base station architecture provided in this application can effectively control use of a radio frequency resource when adaptively and quickly responding based on load, a signal quality level, and the like to perform adaptive adjustment, and no complex manual intervention or processing is required, to reduce deployment costs.

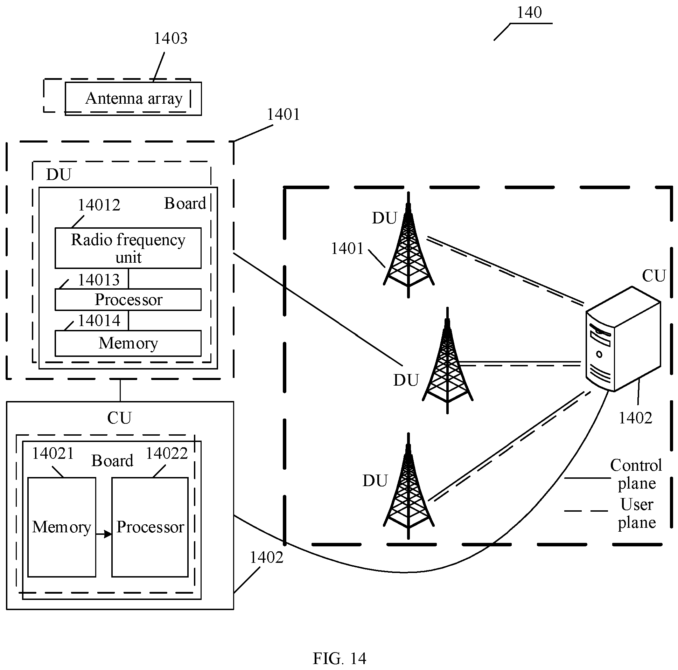

The foregoing describes in detail the communication method in embodiments of this application with reference to FIG. 3 to FIG. 13. The following describes in detail a communication apparatus in embodiments of this application with reference to FIG. 14 to FIG. 15, for example, a network device or an apparatus (for example, a processor, a circuit, or a chip) used in a network device.

FIG. 14 is a diagram of a structure of a communication apparatus according to an embodiment of this application, for example, may be a diagram of a structure of a base station. As shown in FIG. 14, the base station may include the radio frequency module shown in one or more of FIG. 4 to FIG. 6(a) to FIG. 6(c) and FIG. 8 to FIG. 10, to perform a function of the network device in the foregoing method embodiments. The base station 140 may include one or more DUs 1401, one or more CUs 1402, and an antenna array 1403. The CU 1402 may communicate with a next-generation core (NG core, NC) network. The DU 1401 may include at least one radio frequency unit 14012, at least one processor 14013, and at least one memory 14014. The DU 1401 is mainly configured to receive and send radio frequency signals, convert a radio frequency signal and a baseband signal, and perform some baseband processing. The CU 1402 may include at least one processor 14022 and at least one memory 14021. The CU 1402 and the DU 1401 may communicate by using an interface. A control plane (control plane) interface may be Fs-C, for example, F1-C, and a user plane (user plane) interface may be Fs-U, for example, F1-U.

The CU 1402 is mainly configured to perform baseband processing, control the base station, and so on. The DU 1401 and the CU 1402 may be physically disposed together, or may be physically separated, namely, a distributed base station. The CU 1402 is a control center of the base station, may also be referred to as a processing unit, and is mainly configured to complete a baseband processing function. For example, the CU 1402 may be configured to control the base station to perform an operation procedure related to the network device: the BBU in the foregoing method embodiments. The DU 1401 may be configured to control the base station to perform an operation procedure related to the network device: the RRU in the foregoing method embodiments.

In addition, optionally (not shown in the figure), the base station 140 may include one or more antennas (for example, an antenna array in this application), one or more radio frequency units/modules (for example, RUs), one or more DUs, and one or more CUs. The DU may include at least one processor and at least one memory, the at least one antenna and the at least one radio frequency unit may be integrated into one antenna apparatus, and the CU may include at least one processor and at least one memory.

In an example, the CU 1402 may include one or more boards, and multiple boards may jointly support a radio access network (for example, an NR network) of a single access standard, or may respectively support radio access networks (such as an LTE network, an NR network, or another network) of different access standards. The memory 14021 and the processor 14022 may serve one or more boards. In other words, a memory and a processor may be disposed on each board. Alternatively, multiple boards may share a same memory and a same processor. In addition, a necessary circuit may further be disposed on each board. The DU 1401 may include one or more boards, and multiple boards may jointly support a radio access network (for example, an NR network) of a single access indication, or may respectively support radio access networks (such as an LTE network, an NR network, or another network) of different access standards. The memory 14014 and the processor 14013 may serve one or more boards. In other words, a memory and a processor may be disposed on each board. Alternatively, multiple boards may share a same memory and a same processor. In addition, a necessary circuit may further be disposed on each board.

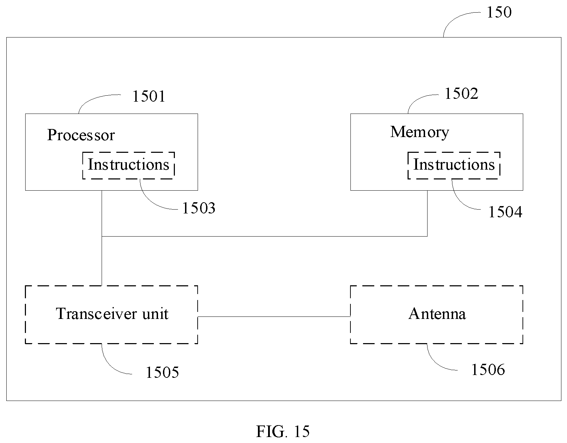

FIG. 15 is a diagram of a structure of a communication apparatus 150. The communication apparatus 150 may be configured to implement the method described in the foregoing method embodiments. For details, refer to the descriptions in the foregoing method embodiments. The communication apparatus 150 may be a chip or a communication apparatus (for example, a base station), and may be specifically a BBU or an RRU.

The communication apparatus 150 includes one or more processors 1501. The processor 1501 may be a general-purpose processor, a dedicated processor, or the like. For example, the processor may be a baseband processor or a central processing unit. The baseband processor may be configured to process a communication protocol and communication data. The central processing unit may be configured to: control an apparatus (for example, a base station or a chip), execute a software program, and process data of the software program. The apparatus may include a transceiver unit, configured to input (receive) and output (send) signals. For example, the apparatus may be the chip, and the transceiver unit may be an input and/or output circuit of the chip, or a communication interface. The chip may be used in the communication apparatus (for example, the base station). For another example, the apparatus may be the communication apparatus (for example, the base station), and the transceiver unit may be a transceiver, a radio frequency chip, or the like.

The communication apparatus 150 includes one or more processors 1501. The one or more processors 1501 may implement the method of the network device in the embodiments shown in FIG. 4 to FIG. 6(a) to FIG. 6(c) and FIG. 8 to FIG. 10.

In a possible design, the communication apparatus 150 includes a means (means) configured to receive control information from the network device, and a means (means) configured to send a first-type signal and a second-type signal based on the control information. For example, the control information may be received or the first-type signal or the second-type signal may be sent by using a transceiver, or an input/output circuit, or an interface of a chip. For the control information, the first-type signal, and second-type signal, refer to the related descriptions in the foregoing method embodiments.

Optionally, in addition to implementing the method in one or more of the embodiments in FIG. 4 to FIG. 6(a) to FIG. 6(c) and FIG. 8 to FIG. 10, the processor 1501 may further implement another function.

Optionally, in a design, the processor 1501 may further include instructions 1503. The instructions may be run on the processor, so that the communication apparatus 150 performs the method described in the foregoing method embodiments.

In another possible design, the communication apparatus 150 may alternatively include a circuit, and the circuit may implement a function of the network device in the foregoing method embodiments.

In still another possible design, the communication apparatus 150 may include one or more memories 1502 that store instructions 1504. The instructions may be run on the processor, so that the communication apparatus 150 performs the method described in the foregoing method embodiments. Optionally, the memory may further store data. Optionally, the processor may also store instructions and/or data. For example, the one or more memories 1502 may store a program of the communication method described in the foregoing embodiments, or a related parameter in the foregoing embodiments. The processor and the memory may be separately disposed, or may be integrated together.

In yet another possible design, the communication apparatus 150 may further include a transceiver unit 1505 and an antenna 1506, or include a communication interface. The transceiver unit 1505 may be referred to as a transceiver machine, a transceiver circuit, a transceiver, or the like, and is configured to implement a transceiver function of the apparatus by using the antenna 1506. The communication interface (not shown in the figure) may be used for communication between a core network device and the network device or communication between network devices. Optionally, the communication interface may be a wired communication interface, for example, an optical fiber communication interface. The antenna 1506 is optional.

The processor 1501 may be referred to as a processing unit, and configured to control the apparatus (for example, the base station).

In addition, because sending or receiving performed by the transceiver unit 1505 described in this embodiment of this application is under control of the processing unit (the processor 1501), a sending or receiving action may also be described as being performed by the processing unit (the processor 1501) in this embodiment of this application. This does not affect understanding of the solution by a person skilled in the art.

It should be understood that, the processor in embodiments of this application may be a CPU, or may be another general-purpose processor, digital signal processor (digital signal processor, DSP), an application-specific integrated circuit (application-specific integrated circuit, ASIC), a field programmable gate array (field programmable gate array, FPGA), or another programmable logic device, a discrete gate or transistor logic device, a discrete hardware component, or the like.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a base station. The base station system includes the BBU and the RRU or the AAU in the foregoing embodiments.

An embodiment of this application further provides a computer-readable medium, configured to store computer program code. The computer-readable medium includes instructions used for performing the method performed by the communication apparatus in the communication method in the foregoing method embodiments. The readable medium may be a ROM or a RAM. This is not limited in embodiments of this application.

This application further provides a computer program product. The computer program product includes instructions. When the instructions are executed, a communication apparatus is enabled to perform an operation of the communication apparatus corresponding to the foregoing method.

Based on the descriptions of the foregoing implementations, a person skilled in the art may understand that, for a purpose of convenient and brief description, division into the foregoing functional modules is used as an example for illustration. In actual application, the foregoing functions may be allocated to different functional modules and implemented based on requirements. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, multiple units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the part contributing to the conventional technology, or all or some of the technical solutions may be implemented in a form of a software product. The software product is stored in a storage medium and includes several instructions for instructing a device (which may be a single-chip microcomputer, a chip or the like) or a processor (processor) to perform all or some of the steps of the methods described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A communication method, wherein the method comprises:
using a radio frequency channel in a first radio frequency channel set to carry a first-type signal; and
using a radio frequency channel in a second radio frequency channel set to carry a second-type signal, wherein
the first radio frequency channel set and the second radio frequency channel set are different, and functions of the first-type signal and the second-type signal are different.

2. The method according to claim 1, wherein the first-type signal is a cell-level common signal, and the second-type signal is a user-level signal.

3. The method according to claim 1 or 2, wherein the method further comprises:
determining, based on at least one of a load status on a network side or a signal quality level of a terminal device, a quantity of channels that are in the second radio frequency channel set and that are used to carry the second-type signal.

4. The method according to any one of claims 1 to 3, wherein
in a scenario of a network in which multiple standards coexist, the first-type signal comprises a first-type signal in the multi-standard network.

5. The method according to any one of claims 1 to 4, wherein the method further comprises:
using the first radio frequency channel set to carry the first-type signal and the second-type signal in a time division and/or frequency division manner, wherein the first-type signal comprises a first-type signal in the multi-standard network, and the second-type signal comprises a second-type signal in the multi-standard network.

6. The method according to any one of claims 1 to 5, wherein power of an analog component in the radio frequency channel in the first radio frequency channel set is greater than or equal to power of an analog component in a radio frequency channel that is in the second radio frequency channel set and that carries the second-type signal but does not carry the first-type signal.

7. The method according to any one of claims 1 to 6, wherein
antenna elements corresponding to the first radio frequency channel set are discretely distributed.

8. The method according to any one of claims 1 to 7, wherein
the first radio frequency channel set is coupled to a first module-level digital component set, the second radio frequency channel set is coupled to a second module-level digital component set, and the first module-level digital component set and the second module-level digital component set are different.

9. The method according to claim 8, wherein
the digital component set comprises a fronthaul interface.

10. A communication method, wherein the method comprises:
sending a first control signal, wherein the first control signal indicates that a radio frequency channel in a first radio frequency channel set carries a first-type signal; and
sending a second control signal, wherein the second control signal indicates that a radio frequency channel in a second radio frequency channel set carries a second-type signal, wherein
the first radio frequency channel set and the second radio frequency channel set are different, and functions of the first-type signal and the second-type signal are different.

11. The method according to claim 10, wherein the first-type signal is a cell-level common signal, and the second-type signal is a user-level signal.

12. The method according to claim 10 or 11, wherein before the sending a second control signal, the method further comprises:
determining, based on at least one of a load status on a network side or a signal quality level of a terminal device, a quantity of channels that are in the second radio frequency channel set and that are used to carry the second-type signal.

13. The method according to claim 12, wherein when the load status on the network side is lower and/or the signal quality level of the terminal device is higher, the quantity of the channels used to carry the second-type signal is smaller.

14. The method according to any one of claims 10 to 13, wherein the method further comprises:
sending a third control signal, wherein the third control signal indicates that the first radio frequency channel set carries the first-type signal and the second-type signal in a time division and/or frequency division manner, the first-type signal comprises a first-type signal in a multi-standard network, and the second-type signal comprises a second-type signal in the multi-standard network.

15. The method according to any one of claims 10 to 14, wherein the method further comprises:
sending a fourth control signal, wherein the fourth control signal indicates that a first module-level digital component set and the first radio frequency channel set carry the first-type signal, and a second module-level digital component set and the second radio frequency channel set carry the second-type signal.

16. A communication apparatus, comprising:
a first radio frequency channel set, wherein a radio frequency channel in the first radio frequency channel set is used to carry a first-type signal; and
a second radio frequency channel set, wherein a radio frequency channel in the second radio frequency channel set is used to carry a second-type signal, wherein
the first radio frequency channel set and the second radio frequency channel set are different, and functions of the first-type signal and the second-type signal are different.

17. The communication apparatus according to claim 16, wherein the first-type signal is a cell-level common signal, and the second-type signal is a user-level signal.

18. The communication apparatus according to claim 16 or 17, wherein the communication apparatus further comprises a processor, and
the processor is configured to determine, based on at least one of a load status on a network side or a signal quality level of a terminal device, a quantity of channels that are in the second radio frequency channel set and that are used to carry the second-type signal.

19. The communication apparatus according to any one of claims 16 to 18, wherein
in a scenario of a network in which multiple standards coexist, the first-type signal comprises a first-type signal in the multi-standard network.

20. The communication apparatus according to any one of claims 16 to 19, wherein
the radio frequency channel in the first radio frequency channel set is used to carry the first-type signal and the second-type signal in a time division and/or frequency division manner, wherein the first-type signal comprises a first-type signal in the multi-standard network, and the second-type signal comprises a second-type signal in the multi-standard network.

21. The communication apparatus according to any one of claims 16 to 20, wherein
power of an analog component in the radio frequency channel in the first radio frequency channel set is greater than or equal to power of an analog component in a radio frequency channel that is in the second radio frequency channel set and that carries the second-type signal but does not carry the first-type signal.

22. The communication apparatus according to any one of claims 16 to 21, wherein
antenna elements corresponding to the first radio frequency channel set are discretely distributed.

23. The communication apparatus according to any one of claims 16 to 22, wherein
the first radio frequency channel set is coupled to a first module-level digital component set, the second radio frequency channel set is coupled to a second module-level digital component set, and the first module-level digital component set and the second module-level digital component set are different.

24. The communication apparatus according to claim 23, wherein
the digital component set comprises a fronthaul interface.

25. A communication apparatus, comprising a memory and a transceiver, wherein the memory is configured to store data, and the transceiver is configured to:
send a first control signal, wherein the first control signal indicates that a radio frequency channel in a first radio frequency channel set carries a first-type signal; and
send a second control signal, wherein the second control signal indicates that a radio frequency channel in a second radio frequency channel set carries a second-type signal, wherein
the first radio frequency channel set and the second radio frequency channel set are different, and functions of the first-type signal and the second-type signal are different.

26. The communication apparatus according to claim 25, wherein the first-type signal is a cell-level common signal, and the second-type signal is a user-level signal.

27. A communication apparatus, comprising a unit configured to implement the method according to any one of claims 1 to 9.

28. A communication apparatus, comprising a unit configured to implement the method according to any one of claims 10 to 15.

29. A computer-readable storage medium, wherein the computer-readable storage medium stores instructions, and when the instructions are run on a computer, the computer is enabled to perform the method according to any one of claims 1 to 15.

30. A computer program product, comprising computer instructions, wherein when the computer instructions are run on a computer, the computer is enabled to perform the method according to any one of claims 1 to 15.

31. A communication system, wherein the communication system comprises the communication apparatus according to any one of claims 16 to 24 and the communication apparatus according to either of claims 25 and 26; or
the communication system comprises the communication apparatus according to claim 27 and the communication apparatus according to claim 28.
